# EUROPÄISCHE PATENTANMELDUNG

(11) **EP 4 818 081 A1**
(43) Veröffentlichungstag der Anmeldung: **07.10.2026**
(21) Anmeldenummer: 25167519.5
(22) Anmeldetag: 31.03.2025
(51) Int. Cl.: B65G 13/04, B65G 21/00, B65G 23/32, B65G 23/44, B65G 15/10

(54) **ROLLENBAHN, SET FÜR DIESE, VERFAHREN ZUR ADAPTIERUNG EINER ROLLENBAHN UND VERFAHREN ZUR HERSTELLUNG EINES ENDLOSSEILS FÜR EINE ROLLENBAHN**

(71) Anmelder: EVG Entwicklungs- u. Verwertungs- Gesellschaft m.b.H., 8074 Raaba (AT)
(72) Erfinder: Droschl, Georg, 8442 Kitzeck im Sausal (AT); Baci, Andreas, 8076 Vasoldsberg (AT); Victoria, Britta, 8074 Raaba-Grambach (AT)
(74) Vertreter: Wirnsberger & Lerchbaum Patentanwälte OG

(57) **Zusammenfassung**

Die Erfindung betrifft eine Rollenbahn (1) zum stetigen Fördern von Stückgut, insbesondere Stückgut aus Draht wie Bewehrungsmatten, umfassend eine Vielzahl von länglichen Transportrollen (2), wobei die Transportrollen (2) jeweils eine Rollenlängsachse (21) aufweisen, um welche die Transportrollen (2) drehbar sind, und wobei die Rollen (10) aufeinanderfolgend in einer Reihe mit parallel ausgerichteten Rollenlängsachsen (21) angeordnet sind, um einen Transportweg (3) für das Stückgut in einer Transportrichtung (4) zu bilden. Um Stückgut mit fußseitig vorspringenden Bereichen sicher transportieren zu können, ist erfindungsgemäß vorgesehen, dass die Rollenbahn (1) zumindest eine um die Transportrollen (2) umlaufende und an zumindest einzelnen Transportrollen (2) anliegende Schlaufe (6) umfasst, wobei sich die Schlaufe (6) bei Drehen der Transportrollen (2) mitbewegt.

Des Weiteren betrifft die Erfindung ein Set zur Adaptierung einer Rollenbahn (1), ein Verfahren zur Adaptierung einer Rollenbahn (1) und ein Verfahren zur Herstellung eines Endlosseils für eine Rollenbahn (1).

## Beschreibung

Die Erfindung betrifft eine Rollenbahn zum stetigen Fördern von Stückgut, insbesondere Stückgut aus Draht wie Bewehrungsmatten, umfassend eine Vielzahl von länglichen Transportrollen, wobei die Transportrollen jeweils eine Rollenlängsachse aufweisen, um welche die Transportrollen drehbar sind, und wobei die Rollen aufeinanderfolgend in einer Reihe mit parallel ausgerichteten Rollenlängsachsen angeordnet sind, um einen Transportweg für das Stückgut in einer Transportrichtung zu bilden.

Des Weiteren betrifft die Erfindung ein Set zur Adaptierung einer Rollenbahn.

Darüber hinaus betrifft die Erfindung ein Verfahren zur Adaptierung einer Rollenbahn.

Noch weiter betrifft die Erfindung ein Verfahren zur Herstellung eines Endlosseils für eine Rollenbahn der vorstehend genannten Art.

Bei Fördersystemen wird zwischen Stetigförderern wie Rollenförderern, Kettenförderern, Bandförderern und Gurtförderern einerseits und Unstetigförderern wie Kränen, Hebewerkzeugen und Flurfördermitteln andererseits unterschieden. Für Drahtverbunde für Bewehrungszwecke wie Bewehrungsmatten werden zurzeit nur Rollenförderer, Kettenförderer und Gliederbandförderer verwendet. Band- und Gurtförderer eignen sich für Bewehrungsmatten oder dergleichen zumindest in unmittelbarer Nähe einer Schweißanlage nicht, weil die Bewehrungsmatten durch Schweißen erstellt werden und zumindest unmittelbar nach dem Schweißen auf zu hoher Temperatur sind, um mit Band- oder Gurtförderern transportiert zu werden. Darüber hinaus können ungeachtet einer Temperatur einer Bewehrungsmatte mechanische Beschädigungen am Band oder Gurt auftreten, weshalb Band- oder Gurtförderer für Gittermatten nur vereinzelt zum Einsatz kommen.

Bei Rollenförderern besteht die Gefahr, dass sich zu transportierende Gittermattenkörbe, Bewehrungsbügel, Stäbe oder Stabbündel oder auch andere Arten von Drahtverbunden nicht in einer vorbestimmten bzw. definierten Position befinden. Aufgrund einer nicht gleichbleibenden Kontaktfläche zwischen Transportrollen einer Rollenbahn und dem beförderten Stückgut können sich Stückgüter leicht verschieben oder verdrehen, insbesondere aber auch komplett stecken bleiben. Dadurch wird eine nachfolgende Operation wie ein automatisierter Abtransport oder ein Abbinden erschwert. Auch ein Transport von Paletten oder ähnlichen Transporthilfen, die ebenfalls keine ebene fußseitige Auflagefläche aufweisen, können nur so mit einer Rollenbahn transportiert werden, dass die Aussparungen für Stapler oder Hubwagen längs in eine Transportrichtung der Rollenbahn positioniert werden. Andernfalls besteht die Gefahr, dass die Paletten oder andere Transporthilfen in der Rollenbahn stecken bleiben.

Aufgrund dieser Ausgangslage und der Möglichkeit, dass bei Bewehrungsmatten die Querdrähte bodenseitig angeordnet sind oder sein können, kommen bislang für den Transport von Gittermatten fast ausschließlich Kettenförderer zum Einsatz. Kettenförderer sind jedoch deutlich komplexer aufgebaut als Rollenförderer mit Rollenbahnen und daher nicht nur erheblich kostenaufwendiger als Rollenförderer, sondern auch wartungsintensiver.

Hier setzt die Erfindung an. Aufgabe der Erfindung ist es, eine Rollenbahn eines Rollenförderers derart weiterzuentwickeln, dass mit der Rollenbahn für Stückgut wie Bewehrungsmatten oder andere Gitterverbunde eine verbesserte Förderung des Stückgutes ermöglicht wird.

Ein weiteres Ziel der Erfindung ist es, ein Set der eingangs genannten Art anzugeben, welches sich zur Adaptierung einer Rollenbahn eignet, sodass Stückgut auf verbesserte Weise gefördert werden kann.

Ein noch weiteres Ziel der Erfindung ist es, ein Verfahren zur Adaptierung einer Rollenbahn anzugeben, mit dem eine Rollenbahn eines Rollenförderers geschaffen wird, mit der Stückgut auf verbesserte Weise transportiert werden kann.

Schließlich ist es ein Ziel der Erfindung, ein Verfahren zur Herstellung eines Endlosseils für eine Rollenbahn anzugeben, das dazu ausgelegt ist, um eine Rollenbahn herum angeordnet zu werden, um eine Kraft von Transportrollen auf das Endlosseil zu übertragen, sodass darauf liegendes Stückgut gefördert werden kann.

Die Aufgabe der Erfindung wird gelöst, wenn bei einer Rollenbahn der eingangs genannten Art die Rollenbahn zumindest eine um die Transportrollen umlaufende und an zumindest einzelnen Transportrollen anliegende Schlaufe umfasst, wobei sich die Schlaufe bei Drehen der Transportrollen mitbewegt.

Bei der erfindungsgemäßen Lösung ist von Vorteil, dass der Vorschub des Stückgutes über einen Kontakt des Stückgutes mit der Schlaufe erfolgt, die wiederum über die Transportrollen in eine umlaufende Bewegung versetzt wird. Damit kann auch Stückgut transportiert werden, welches fußseitig bzw. einem Boden zugewendet vorspringende Bereiche aufweist. Diese vorspringenden Bereiche können beispielsweise bei Gittermatten wie Bewehrungsmatten Querstäbe sein, die fußseitig liegen, wohingegen angeschweißte Längsdrähte an einer Kopfseite des Gitterverbundes angeordnet sind. Insbesondere kann dadurch die Gefahr eines Steckenbleibens von Stückgut zwischen einzelnen Transportrollen der Rollenbahn verhindert oder zumindest reduziert werden. Auch ist eine kontinuierliche, positionsgenaue Förderung der Stückgüter möglich, was im Anschluss auch eine automatisierte Abnahme des Stückgutes, insbesondere ein getaktetes Abnehmen des Stückgutes von der Rollenbahn des Rollenförderers ermöglicht.

Grundsätzlich ist eine Schlaufe ausreichend, bevorzugt sind aber mehrere Schlaufen vorgesehen. Ist eine einzige Schlaufe vorgesehen, so bedarf es in der Regel in Relation zu einer Länge einer Transportrolle einer entsprechend breiten Ausbildung der Schlaufe, um ein Verkippen des transportierten Stückgutes während des Transportes auf der Rollenbahn zu vermeiden. Mehrere Schlaufen bringen den Vorteil, dass diese relativ dünn und damit materialsparend hergestellt werden können. Die mehreren Schlaufen sind dabei so nebeneinander angeordnet, dass das zu transportierende Stückgut sicher und positionsstabil entlang der Rollenbahn gefördert werden kann.

Soweit im Folgenden lediglich auf zumindest eine Schlaufe Bezug genommen wird, gelten die Ausführungen analog für Ausbildungsvarianten mit mehreren Schlaufen.

Bevorzugt ist vorgesehen, dass die zumindest eine Schlaufe, vorzugsweise alle Schlaufen, als Endlosschlaufen ausgebildet sind. Die Endlosschlaufe oder die Endlosschlaufen laufen um die Transportrollen herum. Sind mehrere Schlaufen vorgesehen, weisen diese vorzugsweise die gleiche Länge auf, um in Kontakt mit Transportrollen entlang der Rollenbahn homogene Bedingungen vorliegen zu haben. Die Endlosschlaufen weisen über eine gesamte Länge im Wesentlichen einen gleichen Durchmesser auf. Dadurch sind einheitliche Bedingungen gegeben. Eine Schlaufe kann im Querschnitt rund ausgebildet sein, wenngleich auch im Querschnitt rechteckige Varianten möglich sind, insbesondere wenn nur eine Schlaufe vorgesehen ist.

Eine Anzahl der Schlaufen, die um die Transportrollen herum angeordnet sind, hängt von der Breite der Rollenbahn ab. Grundsätzlich gilt, dass je breiter die Rollenbahn ist, umso mehr Schlaufen vorzusehen sind. In der Regel ist es ausreichend, dass zwei bis zwanzig Schlaufen vorgesehen sind, je nach Breite der Rollenbahn und Breite einer Schlaufe.

Sind mehrere Schlaufen vorgesehen, so sind diese mit Vorteil im Wesentlichen ident ausgebildet. Zweckmäßigerweise liegt die zumindest eine Schlaufe an einer überwiegenden Anzahl von Transportrollen an diesen an. Dies gilt analog, wenn mehrere Schlaufen vorgesehen sind. Besonders vorteilhaft ist es für eine gute Kraftübertragung, wenn die Schlaufe oder die Schlaufen an allen Transportrollen anliegen. Die zumindest eine Schlaufe ist zweckmäßigerweise parallel zur Transportrichtung angeordnet. Dies trifft auch zu, wenn mehrere Schlaufen vorgesehen sind; die Schlaufen sind dann parallel zueinander angeordnet. Dabei kann ein gleicher Abstand zwischen den Schlaufen gegeben sein. Grundsätzlich ist es aber auch denkbar, je nach Ausbildung der Transportrollen, dass die Schlaufen auch schräg zur Transportrichtung verlaufend angeordnet sind. Die Schlaufe oder die Schlaufen können, gegebenenfalls mit hierfür eingerichteten Schlaufenführungen, auch in Kurvenbahnen geführt sein, beispielsweise um einen Transport durch eine Produktionshalle zu ermöglichen, Höhenunterschiede zu überwinden und/oder ein flächiges Stückgut wie eine Bewehrungsmatte aufzustellen. Eine einfache Ausbildung ist aber mit einer Parallelanordnung in Bezug auf die Transportrichtung gegeben.

Die Transportrollen werden aktiv angetrieben. Hierfür sind ein oder mehrere Antriebe vorgesehen, die dazu eingerichtet sind, die Transportrollen anzutreiben. Die zumindest eine Schlaufe wird zweckmäßigerweise passiv durch die Transportrollen angetrieben. Durch eine Anlage der umlaufenden Schlaufe oder Schlaufen an den Transportrollen ist ein ausreichend hoher Reibungswiderstand gegeben, sodass eine Drehung der Transportrollen die anliegende Schlaufe oder anliegenden Schlaufen ebenfalls in Dreh- bzw. Umlaufbewegung versetzt. Die Transportrollen können hierfür mit einer glatten Oberfläche ausgebildet sein. Grundsätzlich sind die Transportrollen mit einer Längsachse und etwa zylindrisch ausgebildet, wobei die Transportrollen mit einem vorbestimmten Abstand voneinander positioniert sind, und zwar parallel und mit den Längsachsen quer zur Transportrichtung. Möglich ist es aber auch, dass die Transportrollen eine strukturierte Oberfläche aufweisen, welche mit der oder den Schlaufen in Berührung kommt.

Besonders bevorzugt ist es, insbesondere für einen Transport von Gitterverbunden wie Bewehrungsmatten, wenn die Schlaufe als Drahtseil ausgebildet ist. Sind mehrere Schlaufen vorgesehen, sind diese bevorzugt allesamt als Drahtseile, besonders bevorzugt als im Wesentlichen idente Drahtseile, ausgebildet. Durch die Ausbildung als Drahtseil wird eine Beschädigung der Rollenbahn durch eine Gittermatte oder einen anderen Drahtverbund vermieden. Des Weiteren können auch ohne Weiteres noch auf nach dem Schweißen auf Temperatur befindliche Gitterverbunde transportiert werden, ohne dass es zu Beschädigungen der Rollenbahn kommt. Auf der anderen Seite können die Drahtseile auch geeignet mit den Transportrollen zusammenwirken, um mit relativ geringen Kräften in Umlaufbewegung versetzt zu werden.

Um die zumindest eine Schlaufe oder die Schlaufen geeignet in Umlaufbewegung versetzen zu können, ist bevorzugt an der Rollenbahn eine Spanneinheit zum Vorspannen der zumindest einen Schlaufe angeordnet. Sind mehrere Schlaufen angeordnet, ist zumindest eine Spanneinheit für jede Schlaufe vorgesehen. Bevorzugt ist es, dass die Spanneinheit für eine Schlaufe, insbesondere für ein umlaufendes Drahtseil, zwischen einer endseitigen Transportrolle und einer benachbarten Transportrolle angeordnet ist, also zwischen der ersten und der zweiten Transportrolle und/oder der vorletzten und der letzten Transportrolle. Bevorzugt sind dabei zwei Spanneinheiten pro Schlaufe, insbesondere pro Drahtseil, vorgesehen, welche sich in diesem Fall vorzugsweise zwischen der ersten und zweiten Transportrolle sowie der letzten und vorletzten Transportrolle befinden. An diesen Stellen ist eine gute Zugänglichkeit gegeben, sodass eine bereits bestehende Rollenbahn einlaufseitig und auslaufseitig relativ einfach adaptiert werden kann. Mit der oder den Spanneinheiten kann eine geeignete Vorspannung auf die Schlaufen, insbesondere Drahtseile, aufgebracht werden. Allfällige Längenunterschiede einzelner Schlaufen oder Drahtseile können dann kompensiert werden. Eine gemeinsame Vorspannung mehrerer Schlaufen, die zuvor bereits individuell vorgespannt wurden, kann über eine der endseitigen Umlenkrollen der Transportrollen oder auch durch Vorspannen einzelner Rollgangsegmente erfolgen.

Für ein Aufbringen einer Vorspannung ist bevorzugt vorgesehen, dass die Spanneinheit eine Druckfeder und eine Anstellung umfasst, wobei die Druckfeder mit der Anstellung verbunden ist und wobei die Anstellung an der Schlaufe zur Einstellung einer Vorspannung der zumindest einen Schlaufe in Abhängigkeit einer Kraft der Druckfeder zur Anlage bringbar ist. Mit einer derartigen Spanneinheit kann auf einfache Weise die Vorspannung, in Abhängigkeit einer Einstellung der Druckfeder, eingestellt werden. Die Druckfeder ist dabei bevorzugt so angeordnet, dass diese von oben mit einem Werkzeug durch die Rollenbahn hindurch betätigbar ist, sodass die Spanneinheit auch leicht zugänglich ist. Die Druckfeder ist etwa senkrecht angeordnet und steht bevorzugt über mehrere zum Teil gelenkig verbundene Hebel mit der Anstellung in Verbindung. Es ist ausreichend, wenn zwei Hebel vorhanden sind. Einer der Hebel steht an einem Ende des Hebels mit einem Ende der Druckfeder in Verbindung, der andere Hebel an einem Endes dieses Hebels mit der Anstellung. Die beiden Hebel sind mit benachbarten Enden jeweils an einer Drehwelle drehfest befestigt. Dadurch kann eine Linearbewegung der Druckfeder in ein Heben oder Senken der Anstellung umgesetzt werden. Die Anstellung selbst kann drehbar gelagert sein. Die Anstellung kann so angeordnet sein, dass diese innerhalb einer Schlaufe sitzt oder auch von außen an der Schlaufe angreift. Letzteres ist bevorzugt, und zwar einer leichten Zugänglichkeit für den Fall einer Wartung. Die Anstellung kann zur Führung der Schlaufe auch eine Nut aufweisen. Vorteilhafterweise ist die Anstellung als drehbar gelagerte runde Scheibe ausgebildet, die günstigerweise an einer Außenseite der Scheibe umlaufend die erwähnte Nut aufweist.

Aufgrund der Vorspannung durch die Schlaufe oder Schlaufen können auf die endseitigen Transportrollen, also die sogenannten Umlenkrollen (erste und letzte Transportrolle), zusätzliche Kräfte wirken. Um diesen zusätzlichen Kräften entgegenzuwirken, ist bzw. sind bevorzugt zumindest eine, vorzugsweise beide, endseitigen Transportrollen durch eine Rollenabstützung gestützt. Die Rollenabstützung selbst kann aus zwei kleineren Rollen bestehen, welche jeweils Drehachsen aufweisen, die parallel zur Längsachse der zugeordneten Transportrolle angeordnet sind. Die Rollen der Rollenabstützung sind im Querschnitt zur Drehachse sowie zur Längsachse der Transportrollen mit kleinerem Durchmesser ausgebildet. Für eine gute kräftemäßige Abstützung ist es zweckmäßig, dass mehrere Rollen an der Rollenabstützung vorgesehen sind. Zwei bis vier derartiger Rollen sind in der Regel ausreichend, je nach Dimensionierung der Rollen. Besonders günstig ist es, wenn zwei Rollen pro Transportrolle vorgesehen sind, wobei die beiden Rollen lotrecht angeordnet sind. Die Transportrollen können an den Rollen zur Berührung kommen und werden dadurch abgestützt. Die Rollen sind hierfür drehbar gelagert und können bei Bedarf mit einer Oberfläche ausgebildet sein, welche bei der Abstützung der Transportrolle nicht oder wenig verschleißt, gleichzeitig aber für keinen allzu großen Reibungswiderstand sorgt.

Die Rollenabstützung kann zusammen mit der Spanneinheit auf einem gemeinsamen Träger angeordnet sein. Der Träger wiederum kann auf einem Querbalken montiert sein, welcher sich parallel zu den Längsachsen der Transportrollen erstreckt und mehrere Träger für Spanneinheiten und Rollabstützungen trägt.

Eine erfindungsgemäße Rollenbahn sowie ein Rollenförderer mit einer derartigen Rollenbahn kommen bevorzugt bei Anlagen zum Einsatz, in welchen Draht und/oder Stabstahl verarbeitet wird, beispielsweise zur Herstellung von Gittermatten als Bewehrungselemente, Bewehrungskörben, abgelängten Stabstahl als Bewehrungsstangen oder auch aus Drähten geschweißte Zaunelemente. Dementsprechend besteht ein weiterer Aspekt der Erfindung in der Bereitstellung einer Anlage mit zumindest einer Gitterschweißeinrichtung, welcher eine erfindungsgemäße Rollenbahn vorgeordnet oder nachgeordnet ist. Der Rollenförderer umfasst die Rollenbahn sowie Komponenten zum Betrieb des Rollenförderers, insbesondere Steuerungs- und/oder Regelungseinrichtungen.

Das weitere Ziel der Erfindung wird erreicht, wenn bei einem Set der eingangs genannten Art das Set zumindest eine Schlaufe und eine Spanneinheit zum Spannen der Schlaufe sowie einen Träger umfasst, wobei die Spanneinheit am Träger angeordnet ist. Mit einem derartigen Set kann eine bestehende Rollenbahn eines Rollenförderers auf einfache Weise adaptiert werden, um damit zu einer erfindungsgemäßen Rollenbahn mit den zuvor erläuterten Vorteilen zu gelangen. Das Set kann des Weiteren einen längserstreckten Querträger wie einen Querbalken umfassen, auf dem wiederum der Träger für die Spanneinheit angeordnet ist. Der Träger für die Spanneinheit kann zudem eine Rollenabstützung tragen.

Bei einem erfindungsgemäßen Set ist von Vorteil, dass dieses bei einfacher Ausbildung neben der Nachrüstung einer bestehenden Rollenbahn zur Beförderung von Stückgütern mit bodenseitig vorstehenden Stückgutbereichen eine gezielte Vorspannung einer Schlaufe wie eines Drahtseils ermöglicht. Sind mehrere Schlaufen oder Drahtseile vorgesehen, so können diese mit jeweils einer Spanneinheit geeignet vorgespannt werden, um allfällige Längenunterschiede einzelner Schlaufen oder Drahtseile auszugleichen. Da die Spanneinheit in der Regel eine Druckfeder umfasst, welche mit einer heb- und senkbaren Anstellung verbunden ist und ein Heben oder Senken derselben durch Betätigung der Druckfeder erlaubt, kann eine Vorspannung einer Schlaufe oder eines Drahtseils exakt justiert werden.

Der Träger kann am Querträger lösbar befestigt sein. Der Querträger kann insbesondere als Hohlprofil ausgebildet sein. Üblicherweise weist der Querträger eine Längserstreckung auf, die in etwa einer Längserstreckung einer Transportrolle entspricht. Dies ermöglicht es, wenn mehrere Schlaufen wie Drahtseile vorgesehen sind, am Querträger eine ausreichende Anzahl von Spanneinheiten anzuordnen. Der Querträger kann mit dem Träger integral ausgebildet sein. Ist ein gesonderter Träger mit dem Querträger verbunden, erfolgt dies vorzugsweise über eine lösbare Verbindung.

Das weitere Ziel der Erfindung wird erreicht, wenn bei einem Verfahren zur Adaptierung einer Rollenbahn ein erfindungsgemäßes Set in einer Rollenbahn angeordnet wird. Eine Anordnung erfolgt dabei vorzugsweise innerhalb der Rollenbahn, somit zwischen einer ersten Transportrolle und einer letzten Transportrolle. Mit Vorteil ist ein solches Set zwischen der ersten Transportrolle und der zweiten Transportrolle und/oder zwischen einer vorletzten und einer letzten Transportrolle angeordnet. Somit ergibt sich vorzugsweise auch, dass innerhalb der Rollenbahn zwischen endseitigen Transportrollen und hierzu benachbarten Transportrollen jeweils eine Spanneinheit für eine Schlaufe angeordnet wird. In diesem Fall sind pro Schlaufe zwei Spanneinheiten vorgesehen.

Das noch weitere Ziel der Erfindung wird erreicht, wenn bei einem Verfahren zur Herstellung eines Endlosseils für eine erfindungsgemäße Rollenbahn, insbesondere eines Endlosdrahtseils, an Seilenden Kappen stoffschlüssig, insbesondere durch Schweißen, wie beispielsweise durch MAG-Schweißen, angeordnet oder gebildet werden, wonach die Seilenden im Bereich der Kappen miteinander stoffschlüssig, insbesondere durch Schweißen, unter Bildung des Endlosseils miteinander verbunden werden. Die Bildung von Kappen kann direkt an einem Seilende durch Materialauftrag, zum Beispiel durch MAG-Schweißen, erfolgen oder es können vorgefertigte Kappen mit den Seilenden stoffschlüssig verbunden werden, vorzugsweise ebenfalls durch Schweißen.

Eine Bildung einer Schlaufe oder eines Drahtseils, welches Transportrollen umlaufend umgeben kann, ist eine Herausforderung, insbesondere wenn ein erfindungsgemäßes Set zur Nachrüstung einer bestehenden Rollenbahn eingesetzt werden soll. Ein Spleißen von Seilenden ist zwar grundsätzlich möglich, erfordert allerdings einen hohen Zeiteinsatz, woraus wiederum hohe Kosten folgen. Darüber hinaus ist mit einer Durchmesserzunahme im Verbindungsbereich der Seilenden sowie einer erhöhten Längentoleranz bei Einsatz mehrerer Endlosseile zu rechnen. Mit einem erfindungsgemäßen Verfahren lassen sich diese potenziellen Probleme vermeiden. Hierfür erfolgt in einem ersten Schritt ein Aufbringen von Kappen auf die beiden Enden eines Seils. Das Aufbringen erfolgt dabei stoffschlüssig. Insbesondere können die Kappen am Drahtseil durch Schweißen, insbesondere MAG- oder MIG-Schweißen, unmittelbar gebildet werden. Hierfür wird zum Aufbringen einer Kappe auf ein Ende eines Drahtseils das Drahtseil in einen Metallblock, insbesondere Kupferblock, derart eingespannt, dass ein Ende vorsteht. Das Ende steht dabei mit Vorteil genau so weit aus dem Metallblock vor, wie eine Höhe einer zu bildenden Kappe beträgt. Anschließend wird die Kappe beispielsweise durch MAG-Schweißen am Drahtseilende gebildet. Der Metallblock wird dabei mit Vorteil gekühlt, um eintretende Wärme vom Drahtseil abzuführen. Auf diese Weise werden an beiden Enden des Drahtseils Kappen aufgeschweißt bzw. gebildet. Die Drahtenden können anschließend abgeschliffen werden, um eine Anpassung an den Drahtseildurchmesser zu erreichen. In einem zweiten Schritt werden die beiden Enden des mit Kappen versehenen Drahtseils wiederum in einer Schweißvorrichtung eingespannt, wobei die beiden mit Kappen bestückten Enden des Drahtseils aneinander angestellt und verschweißt werden. Dieser letzte Schritt kann direkt an der Rollenbahn durchgeführt werden und ermöglicht so einen einfachen Einbau und eine genaue Längenbestimmung, aber auch eine Reparatur oder einen Austausch von Drahtseilen oder allgemein Schlaufen. Während des zweiten Schrittes des stoffschlüssigen Verbindens oder bei Drahtseilen Verschweißen der Drahtenden kann eine Kühlung der Schweißvorrichtung erfolgen. Die Schweißvorrichtung für den zweiten Schritt ist in der Regel ebenfalls ein Metallblock, insbesondere Kupferblock, der dafür eingerichtet ist, die beiden anzustellenden Enden des Drahtseils für und während des Schweißvorganges zu klemmen.

Weitere Merkmale, Vorteile und Wirkungen der Erfindung ergeben sich aus den nachfolgend dargestellten Ausführungsbeispielen. In den Zeichnungen, auf welche dabei Bezug genommen wird, zeigen:
Fig. 1 eine schematische Darstellung einer Rollenbahn gemäß dem Stand der Technik;
Fig. 2 eine schematische Darstellung einer erfindungsgemäßen Rollenbahn;
Fig. 3 eine Seitenansicht einer erfindungsgemäßen Rollenbahn;
Fig. 4 eine Draufsicht auf eine erfindungsgemäße Rollenbahn;
Fig. 5 eine Spanneinheit einer erfindungsgemäßen Rollenbahn entsprechend dem hervorgehobenen Bereich V in Fig. 3;
Fig. 6 eine Schweißeinrichtung samt Drahtseil;
Fig. 7 mit Kappen bestückte Drahtseilenden;
Fig. 8 eine weitere Schweißvorrichtung;
Fig. 9 ein Endlosdrahtseil im Bereich verbundener Drahtseilenden.

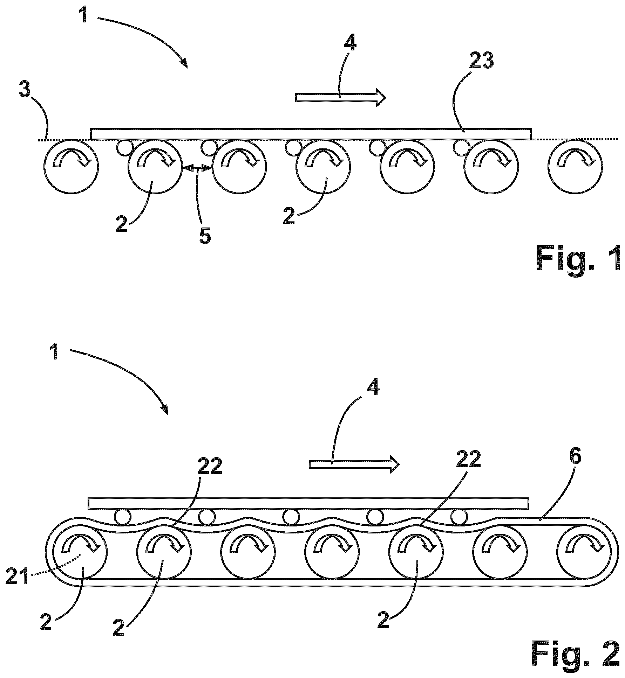

In Fig. 1 ist ein Rollenförderer gemäß dem Stand der Technik schematisch dargestellt. Der Rollenförderer umfasst eine Rollenbahn 1 mit einer Vielzahl von Transportrollen 2. Die Transportrollen 2 werden über einen oder mehrere geeignete Antriebe wie durch die Pfeile angedeutet in Drehbewegung versetzt, um ein Stückgut wie eine Gittermatte 23 entlang eines Transportweges 3 in Transportrichtung 4 zu transportieren. Wie ersichtlich ist, weist die Gittermatte 23 Längsdrähte und Querdrähte auf, wobei die Querdrähte fußseitig angeordnet sind und damit zwischen die Transportrollen 2, die in einem vorbestimmten Abstand 5 voneinander distanziert angeordnet sind, geraten kann. Dies kann zu einer Blockade oder auch zu einem Drehen des Stückgutes führen. Ähnlich verhält es sich, wenn andere Gegenstände wie Paletten transportiert werden, wenn das geförderte Stückgut fußseitig vorspringende Bereiche aufweist, die zwischen die Transportrollen 2 gelangen können.

In Fig. 2 ist schematisch eine erfindungsgemäße Rollenbahn 1 dargestellt. Die Rollenbahn 1 ist Teil eines Rollenförderers, der weitere Komponenten wie zumindest einen Antrieb für die Transportrollen 2, eine Steuer- und Regelungseinrichtung, beispielsweise eine SPS-Steuerung, und andere Komponenten umfasst, die für den Betrieb der Rollenbahn 1 zwecks Förderung von Stückgut erforderlich sind. Wie in der schematischen Seitenansicht in Fig. 2 ersichtlich ist, umfasst die Rollenbahn 1 mehrere Transportrollen 2, die mit senkrecht zur Blattebene verlaufenden Längsachsen ausgebildet sind. Es können grundsätzlich eine beliebige Anzahl von Transportrollen 2 vorgesehen sein, die grundsätzlich im Wesentlichen in einer Ebene liegen und mit einem oder mehreren Antrieben ausgestattet werden können, um ähnlich wie in Fig. 1 dargestellt und wiederum durch Pfeile verdeutlicht in Drehbewegung versetzt werden zu können. Im Gegensatz zu Fig. 1 ist allerdings bei der Rollenbahn 1 gemäß Fig. 2 in der Seitenansicht eine Schlaufe 6 ersichtlich, welche insbesondere als Drahtseil 7 gebildet sein kann. Diese Schlaufe 6 ist als Endlosschlaufe bzw. Endlosdrahtseil ausgebildet und läuft um die Transportrollen 2 herum. Dabei liegt die Schlaufe 6 bzw. das Endlosdrahtseil an den einzelnen Transportrollen 2 an. Insbesondere im Bereich der ersten Transportrolle 2 und der letzten Transportrolle 2 in Transportrichtung 4 liegt die Schlaufe 6 an Transportrollen 2 an. Wie dargestellt kann die Schlaufe 6 bzw. das Endlosdrahtseil aber auch an den anderen Transportrollen 2 anliegen und ist dies zweckmäßig, damit die Schlaufe 6 bzw. das Endlosdrahtseil bei Bewegung der Transportrollen 2 in der eingezeichneten Drehrichtung ebenfalls in eine umlaufende Bewegung in die gleiche Richtung versetzt wird. Der gesonderte Antrieb für eine Bewegung der Schlaufe 6 bzw. des Endlosdrahtseils ist nicht erforderlich, dieses wird somit passiv mit den Transportrollen 2 mitbewegt und kommt auch zum Stillstand, wenn die Transportrollen 2 nicht mehr gedreht werden. Durch die vorgesehene Schlaufe 6 bzw. das Endlosdrahtseil ist es für transportierendes Stückgut wie Bewehrungsmatten mit fußseitig angeordneten Querstäben, die parallel zu den Längsachsen der Transportrollen 2 verlaufen, nicht mehr möglich, zwischen Transportrollen 2 hineinzugleiten und gegebenenfalls die Rollenbahn zu blockieren oder auch nur durch Berührung mit einer Transportrolle 2 zu verdrehen. Vielmehr ist durch das erfindungsgemäße Konzept einer umlaufenden Schlaufe 6 kein direkter Kontakt mehr des Stückgutes mit den Transportrollen 2 gegeben, sondern wird anders betrachtet das Stückgut in der Seitenansicht gemäß Fig. 2 durch die Schlaufe 6 bzw. das Endlosdrahtseil beabstandet zu Rollenoberflächen 22 der Transportrollen 2 gehalten. Die Transportrollen 2 weisen Rollenlängsachsen 21, die parallel ausgerichtet sind und um welche die Transportrollen 2 drehbar gelagert sind.

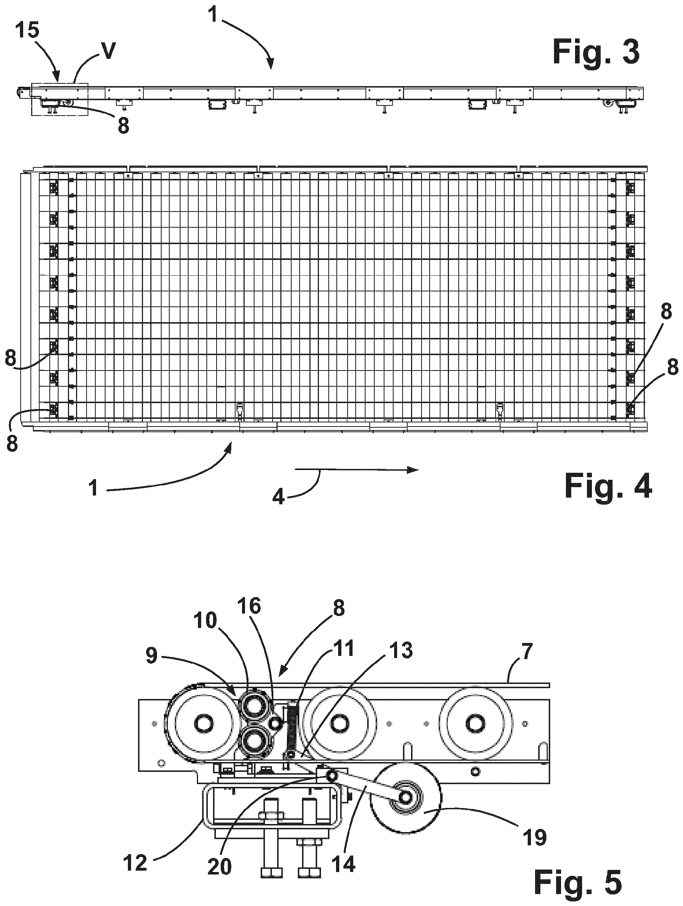

In Fig. 2 ist in der Seitenansicht lediglich eine Schlaufe 6 bzw. ein Endlosdrahtseil ersichtlich. Fig. 3 bis Fig. 5 zeigen eine Rollenförderanlage in mehreren Ansichten (Fig. 4 und Fig. 5) sowie einen Ausschnitt zu einer noch zu erläuternden Spanneinheit 8.

In Fig. 4 (Seitenansicht) und Fig. 5 (Draufsicht) ist eine Rollenbahn 1 eines Rollenförderers dargestellt. Der Rollenförderer umfasst neben der dargestellten Rollenbahn 1 weitere Komponenten, die zum Betrieb der Rollenbahn 1 und insbesondere zum Fördern von Stückgut entlang der Transportrichtung 4 erforderlich sind, beispielsweise Antriebe sowie eine geeignete Steuerung. Der Rollenförderer ist ebenso wie die Rollenbahn 1 Teil einer Anlage zur Herstellung von Produkten aus Stabstahl, beispielsweise Bewehrungsstangen, Bewehrungsmatten oder auch Zaunelemente aus Drähten.

Die Rollenbahn 1 des Rollenförderers und der Rollenförderer selbst sind Teil einer größeren Anlage, in welcher Draht zu Bewehrungselementen verarbeitet wird. Hierfür ist die Rollenbahn 1 entsprechend breit ausgelegt, um insbesondere Gittermatten 23 unterschiedlicher Breiten, somit unterschiedlicher Querdrahterstreckungen, transportieren zu können. An der Rollenbahn 1 sind mehrere Endlosdrahtseile als Schlaufen 6 angeordnet. Eine Anzahl der Endlosdrahtseile ist dabei so gewählt, dass möglichst sicher eine Gittermatte 23 oder auch ein anderes Element aus einem Drahtverbund, gegebenenfalls auch einzelne Stabelemente aus Draht, positionsstabil entlang der Transportrichtung 4 über die Rollenbahn 1 bzw. mit diesem transportiert werden können. Eine Anzahl der Endlosdrahtseile, die an den Transportrollen 2 der Rollenbahn 1 angeordnet sind, richtet sich allgemein nach den zu transportierenden Stückgütern. Grundsätzlich ist es zweckmäßig, so viele Endlosdrahtseile umlaufend um die Transportrollen 2 zu positionieren, dass die Rollenbahn 1 insgesamt für möglichst viele verschiedene Stückgüter verwendet werden kann bzw. berücksichtigt ist, dass auch neue Schweißprodukte einer Gitterschweißanlage noch mit den zuvor allgemein erläuterten Vorteilen transportiert werden können. Zu diesem Zweck weist die Rollenbahn eine Vielzahl von Sets 15 mit einer Schlaufe 6 und jeweils zwei Spanneinheiten 8 auf. In Fig. 5 ist eine Spanneinheit 8 näher dargestellt, die bereits in Fig. 3 und Fig. 4 ersichtlich ist, in Fig. 5 aber vergrößert dargestellt ist. Die Spanneinheit 8 ist an einem Träger 16 befestigt. Der Träger 16 ist wiederum an einem Querträger 12 befestigt, welcher längserstreckt ausgebildet ist und sich im Wesentlichen normal zur Transportrichtung 4 erstreckt. Der Querträger 12 ist dazu ausgebildet, gegebenenfalls mehrere Träger 16 für Spanneinheiten 8 für unterschiedliche Endlosdrahtseile, wie diese in Fig. 4 ersichtlich sind, aufzunehmen. Die Träger 16 sind dabei lösbar am Querträger 12 befestigt. Die Situation in Fig. 5 bezieht sich auf eine Spanneinheit 8, die an einem Träger 16 positioniert ist, der zwischen einer ersten Transportrolle und einer zweiten Transportrolle einer Rollenbahn 1 angeordnet ist. Auch endseitig der Rollenbahn 1, somit zwischen einer vorletzten Transportrolle und der letzten Transportrolle kann eine analoge Spanneinheit 8 vorgesehen sein, die allerdings um 180° in Transportrichtung 4 verdreht ist. Die Spanneinheit 8 umfasst eine Druckfeder 11, die ein erstes, oberes Ende und ein zweites, unteres Ende aufweist. Das erste Ende ist dazu ausgebildet, dass ein Werkzeug eingreifen kann, um eine Länge der Druckfeder 11 einzustellen. Das zweite Ende ist ortsfest fixiert und steht mit einem ersten Hebel 13 in Wirkverbindung. Dieser erste Hebel 13 wiederum steht mit einem zweiten Hebel 14 über eine gemeinsame Welle 20 miteinander in Verbindung. Über diese Welle 20 kann über eine Änderung einer Länge der in etwa senkrecht angeordneten Druckfeder 11 der an einem Ende ebenfalls an der Welle 20 gelagerte zweite Hebel 14 bewegt werden, der mit einer Anstellung 19 in Wirkverbindung steht. Die Anstellung 19 kann dadurch gehoben oder gesenkt werden. Im Ausführungsbeispiel gemäß Fig. 5 ist die Anstellung 19 positionsmäßig so angeordnet, dass diese an einer Unterseite der Schlaufe 6 an dieser angestellt werden kann. Möglich ist es aber auch, dass dies an einer Innenseite, somit innerhalb der Schlaufe 6, erfolgt. Dies ist allerdings eine konstruktiv aufwendigere Lösung, weshalb die dargestellte Ausführungsvariante bevorzugt ist. Da die Druckfeder 11 von oben durch die Rollenbahn 1 hindurch mit einem Werkzeug betätigbar ist, kann eine Einstellung der Druckfeder 11 im praktischen Betrieb relativ einfach von oben durch eine Öffnung, wie durch einen Abstand 5 zwischen zwei Transportrollen 2 definiert ist, erfolgen. Wird die Druckfeder 11 betätigt, wird damit über die Hebel 13, 14 auch die Anstellung 19 gehoben oder gesenkt, sodass dadurch eine gewünschte Vorspannung auf die Schlaufe 6 bzw. das Endlosdrahtseil aufgebracht werden kann. Sind wie im Ausführungsbeispiel gemäß Fig. 3 bis Fig. 5 mehrere Endlosdrahtseile vorgesehen, können dadurch unterschiedliche Eigenschaften der einzelnen Endlosdrahtseile, insbesondere unterschiedliche Längen ausgeglichen werden, sodass an allen Endlosdrahtseilen im Wesentlichen eine gleiche Vorspannung vorliegt. Die Vorspannung wird so gewählt, dass die Endlosdrahtseile durch die Transportrollen 2 in gewünschter Weise mit in eine Umlaufbewegung gesetzt werden, wenn sich die Transportrollen 2 bewegen.

Die Anstellung 19 kann am zweiten Hebel 14 an einem zweiten Ende desselben drehbar gelagert sein, um ein einfaches Umlaufen der Endlosdrahtseile zu ermöglichen. Hierfür kann die Anstellung 19 für ein sauberes Umlaufen des Endlosdrahtseiles eine umfangsseitige Nut aufweisen, in welche das Endlosdrahtseil für eine exakte Führung einläuft. Dadurch ist auch eine gewisse Zentrierung des Endlosdrahtseiles gegeben, wenngleich dies nicht zwingend erforderlich ist.

Wie in Fig. 5 ersichtlich ist, ist die Spanneinheit 8 am Träger 16 befestigt, der wiederum lösbar befestigt am erwähnten Querträger 12 befestigt ist. Der Aufbau ist insgesamt einfach und lässt sich insbesondere ohne Weiteres auch für eine bereits vorliegende Rollenbahn 1 adaptieren, indem die gesamte Einheit an einer Unterseite einer Rollenbahn 1 eingeschoben wird. Dies gilt analog, lediglich um 180° gedreht, für eine Positionierung zwischen der vorletzten und letzten Transporteinheit.

Am Träger 16 kann auch eine in Fig. 5 ersichtliche Rollenabstützung 9 montiert sein, die mehrere Rollen 10 umfasst. Die Rollen 10 sind etwa lotrecht angeordnet, sodass bei den gezeigten zwei Rollen 10 ein Platz zwischen dem umlaufenden Endlosdrahtseil möglichst weitgehend ausgenutzt ist, um die Umlenkrollen, also die erste Transportrolle 2 und analog die letzte Transportrolle 2 ausreichend gegen ein Einrücken dieser Transportrollen 2 aufgrund einer durch die Spanneinheit 8 eingebrachten Vorspannung zu schützen. Die Rollen 10 wirken dem möglichst vollflächig entgegen. Die Rollen 10 der Rollenabstützung 9 sind dabei wie in Fig. 5 ersichtlich vorzugsweise ebenfalls am Träger 16 befestigt, und zwar ortsfest. Es ist aber auch möglich, dass eine oder mehrere Rollen 10 der Rollenabstützung 9 im oder gegen die Transportrichtung 4 verschiebbar sind, um dadurch eine endseitige Transportrolle 2 zu verschieben, wodurch eine Vorspannung auf alle Endlosdrahtseile gleichzeitig (insbesondere nach Einstellung einer individuellen Vorspannung für die Endlosdrahtseile) aufgebracht werden kann. Es können aber auch gesonderte Einrichtungen vorgesehen sein, um insbesondere die endseitigen Transportrollen 2 entlang der Transportrichtung 4 zu bewegen und damit eine gemeinsame Vorspannung für alle Endlosdrahtseile einzustellen. Möglich ist es auch, dass einzelne Transportrollen 2 entlang der Rollenbahn 1 höhenverstellt werden, um eine gemeinsame Vorspannung für alle Endlosdrahtseile einzustellen.

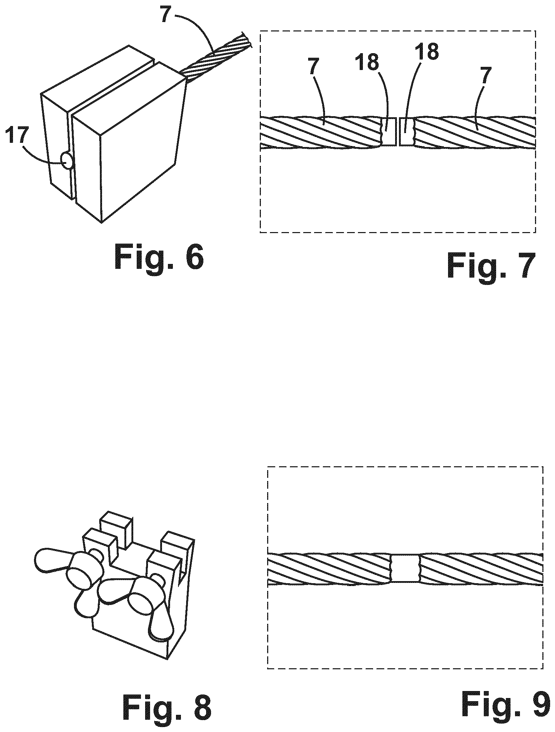

Insbesondere wenn Endlosdrahtseile vorgesehen sind und diese auch dazu eingesetzt werden sollen, einen bereits bestehenden Rollenbahn 1 mit einem oder mehreren Sets 15 zu adaptieren, stellt sich die Herausforderung, die relativ robusten Drahtseile 7 (Durchmesser üblicherweise 0,5 mm bis 30 mm, insbesondere 2 mm bis 10 mm) um die Rollenbahn 1 herum bzw. die Transportrollen 2 anzubringen. Hierfür kann erfindungsgemäß zunächst vorgesehen sein, dass in einem ersten Verfahrensschritt eine Positionierung der Drahtseilenden eines Drahtseils 7 in einer ersten Schweißvorrichtung erfolgt, wie diese in Fig. 6 ersichtlich ist. Ein erstes Ende eines Drahtseils 7 wird in der ersten Schweißvorrichtung eingespannt, die üblicherweise aus einem Kupferblock besteht, und zwar so, dass das Drahtseil 7 geringfügig vorsteht. Ein Ausmaß des Vorstehens ist dabei so gewählt, dass eine Kappe 18, welche etwa zylindrisch ausgebildet und endseitig geschlossen ist, am Seilende 17 durch MAG-Schweißen gebildet werden kann. Dies erfolgt für beide Enden des Drahtseils 7, wobei dies sequentiell oder gleichzeitig erfolgen kann. Möglich ist es auch, dass die erste Schweißvorrichtung zur Aufnahme beider Drahtseilenden ausgebildet ist und beide Drahtseilenden gleichzeitig unter Positionierung in dieser ersten Schweißvorrichtung mit Kappen 18 durch Schweißen stoffschlüssig erstellt werden. Sind an beiden Enden des Drahtseils 7 Kappen 18 aufgebracht, ergibt sich der Zustand gemäß Fig. 7. Ausgehend von diesem Zustand, gegebenenfalls nach einem Schleifen der durch Schweißen erstellten Kappen 18, werden beide Drahtseilenden in einer zweiten Schweißvorrichtung gemäß Fig. 8 eingespannt, welche dazu eingerichtet ist, beide Drahtseilenden samt aufgeschweißten Kappen 18 derart nahe beieinander zu halten, insbesondere durch eine Klemmkraft, dass die Enden im Bereich der Kappen 18 miteinander verschweißt werden können, insbesondere durch WIG-Schweißen. Die Enden des Drahtseils 7 werden dadurch verschweißt, sodass sich ein Endlosdrahtseil ergibt. Der zweite Schritt kann dabei unmittelbar an einer Rollenbahn 1 erfolgen, sodass sich eine besonders einfache Herstellung einer erfindungsgemäßen Rollenbahn 1 ergibt. Bei Bedarf können die entsprechenden Endlosdrahtseile auch relativ einfach ausgetauscht werden, weil unmittelbar vor Ort wiederum ein neues Drahtseil 7 auf einfache Weise durch Verschweißen endseitiger Kappen 18 mit der in Fig. 8 dargestellten zweiten Schweißvorrichtung durchgeführt werden kann.

Mit einem Set 15 wie dieses in Fig. 3 und Fig. 4 dargestellt ist, kann an sich jede bestehende Rollenbahn 1 derart adaptiert werden, dass an sich mit einem Rollenförderer relativ schwierig handhabbare Stückgüter einfach, zuverlässig und positionsstabil befördert werden können. Eine Führung der Drahtseile 7 ist dabei nicht auf das die dargestellten Ausführungsvarianten beschränkt, sondern es kann vielmehr auch vorgesehen sein, dass die Drahtseile mit Drahtseilführungen in Kurvenbahnen umgelenkt werden, wobei im Bereich einer Umlenkung keine Transportrollen 2 vorliegen müssen, aber können. Dies gilt insbesondere, wenn mehrere Rollenbahnen 1 miteinander mit einer oder mehreren Schlaufen 6 verknüpft werden.

## Patentansprüche

1. Rollenbahn (1) zum stetigen Fördern von Stückgut, insbesondere Stückgut aus Draht wie Bewehrungsmatten, umfassend eine Vielzahl von länglichen Transportrollen (2), wobei die Transportrollen (2) jeweils eine Rollenlängsachse (21) aufweisen, um welche die Transportrollen (2) drehbar sind, und wobei die Rollen (10) aufeinanderfolgend in einer Reihe mit parallel ausgerichteten Rollenlängsachsen (21) angeordnet sind, um einen Transportweg (3) für das Stückgut in einer Transportrichtung (4) zu bilden, **dadurch gekennzeichnet, dass** die Rollenbahn (1) zumindest eine um die Transportrollen (2) umlaufende und an zumindest einzelnen Transportrollen (2) anliegende Schlaufe (6) umfasst, wobei sich die Schlaufe (6) bei Drehen der Transportrollen (2) mitbewegt.

2. Rollenbahn (1) nach Anspruch 1, **dadurch gekennzeichnet, dass** die Rollenbahn (1) mehrere Schlaufen (6) umfasst.

3. Rollenbahn (1) nach Anspruch 1 oder 2, **dadurch gekennzeichnet, dass** die zumindest eine Schlaufe (6), vorzugsweise alle Schlaufen (6), als Endlosschlaufen ausgebildet sind.

4. Rollenbahn (1) nach einem der Ansprüche 1 bis 3, **dadurch gekennzeichnet, dass** zwei bis zwanzig Schlaufen (6) vorgesehen sind.

5. Rollenbahn (1) nach einem der Ansprüche 1 bis 4, **dadurch gekennzeichnet, dass** die zumindest eine Schlaufe (6) an einer überwiegenden Anzahl von Transportrollen (2) an diesen anliegt.

6. Rollenbahn (1) nach einem der Ansprüche 1 bis 5, **dadurch gekennzeichnet, dass** die zumindest eine Schlaufe (6) parallel zur Transportrichtung (4) angeordnet ist.

7. Rollenbahn (1) nach einem der Ansprüche 1 bis 6, **dadurch gekennzeichnet, dass** die zumindest eine Schlaufe (6) passiv durch die Transportrollen (2) angetrieben wird.

8. Rollenbahn (1) nach einem der Ansprüche 1 bis 7, **dadurch gekennzeichnet, dass** die zumindest eine Schlaufe (6) als Drahtseil (7) ausgebildet ist.

9. Rollenbahn (1) nach einem der Ansprüche 1 bis 8, **dadurch gekennzeichnet, dass** an der Rollenbahn (1) eine Spanneinheit (8) zum Vorspannen der zumindest einen Schlaufe (6) angeordnet ist.

10. Rollenbahn (1) nach Anspruch 9, **dadurch gekennzeichnet, dass** die Spanneinheit (8) eine Druckfeder (11) und eine Anstellung (19) umfasst, wobei die Druckfeder (11) mit der Anstellung (19) verbunden ist und wobei die Anstellung (19) an der Schlaufe (6) zur Einstellung einer Vorspannung der zumindest einen Schlaufe (6) in Abhängigkeit einer Kraft der Druckfeder (11) zur Anlage bringbar ist.

11. Rollenbahn (1) nach einem der Ansprüche 1 bis 10, **dadurch gekennzeichnet, dass** zumindest eine, vorzugsweise beide, endseitigen Transportrollen (2) durch eine Rollenabstützung (9) gestützt sind.

12. Set (15) zur Adaptierung einer Rollenbahn (1), **dadurch gekennzeichnet, dass** das Set (15) zumindest eine Schlaufe (6) und eine Spanneinheit (8) zum Spannen der Schlaufe (6) sowie einen Träger (16) umfasst, wobei die Spanneinheit (8) am Träger (16) angeordnet ist.

13. Verfahren zur Adaptierung einer Rollenbahn (1), **dadurch gekennzeichnet, dass** ein Set (15) nach Anspruch 12 in einer Rollenbahn (1) angeordnet wird.

14. Verfahren nach Anspruch 13, **dadurch gekennzeichnet, dass** innerhalb der Rollenbahn (1) zwischen endseitigen Transportrollen (2) und hierzu benachbarten Transportrollen (2) jeweils ein Set (15) angeordnet wird.

15. Verfahren zur Herstellung eines Endlosseils für eine Rollenbahn (1) nach einem der Ansprüche 1 bis 11, insbesondere eines Endlosdrahtdrahtseils, wobei ein Seil bereitgestellt wird und dessen Enden unter Bildung eines Endlosseils miteinander verbunden werden, **dadurch gekennzeichnet, dass** an Seilenden (17) Kappen (18) stoffschlüssig, insbesondere durch Schweißen, angeordnet oder gebildet werden, wonach die Seilenden (17) im Bereich der Kappen (18) miteinander stoffschlüssig, insbesondere durch Schweißen, unter Bildung des Endlosseils miteinander verbunden werden.
